# EUROPEAN PATENT APPLICATION

(11) **EP 2 241 474 A1**
(43) Date of publication of application: **20.10.2010**
(21) Application number: 10002516.2
(22) Date of filing: 10.03.2010
(51) Int. Cl.: B60N 2/06, B60N 3/06, B60N 2/18

(54) **Floor structure of driver's seat for automotive vehicle and method of providing the same**

(30) Priority: 17.04.2009 JP 2009100689
(71) Applicant: Mazda Motor Corporation, Aki-gun Hiroshima 730-8670 (JP)
(72) Inventor: Ohtsubo, Tomonori, Aki-gun Hiroshima 730-8670 (JP); Iwamoto, Asami, Aki-gun Hiroshima 730-8670 (JP); Uemura, Hiroki, Aki-gun Hiroshima 730-8670 (JP); Takeda, Yusaku, Aki-gun Hiroshima 730-8670 (JP); Umetsu, Daisuke, Aki-gun Hiroshima 730-8670 (JP); Yatsushiro, Yoji, Aki-gun Hiroshima 730-8670 (JP)
(74) Representative: Müller-Boré & Partner Patentanwälte

(57) **Abstract**

A floor structure comprises an organ type of accelerator pedal 4 supported swingably at a support point with its lower-end hinge portion 16, a hanging type of brake pedal 5 provided beside the accelerator pedal and supported swingably at a support point with its upper pivotal portion, a floor mat 12 covering an upper face of a front portion of a floor panel 9 located in front of the driver's seat, and an incline forming member 44 provided at a specified portion of the floor mat 12 located in back of a pressing-face board 13 of the accelerator pedal 4, the incline forming member 44 forming an incline portion 14 at an upper face of a heel placing area on which a driver's heel is placed, the incline portion 14 being inclined so that its front portion is positioned at a higher level than its rear portion.

## Description

The present invention relates to a floor structure of a driver's seat for an automotive vehicle and a corresponding method of providing the same.

Conventionally, in the organ type of pedal for a vehicle which is provided at the vehicle floor on the driver's seat side, which is disclosed in Japanese Patent Laid-Open Publication No. 2008-59202, for example, it is known to form the pressing face of the pedal, on which the pressing force of the driver acts, with an arc face (concave face) in the side view which corresponds to the convex face of the back face of the driver's shoe so that the back face of the driver's shoe can properly fit the pedal-pressing face. Accordingly, the controllability of the pedal by the driver can be improved.

Further, as disclosed in Japanese Patent Laid-Open Publication No. 2007-109162, the operational assist device of the pressing type of pedal is known. In this device, the step for the heel of the driver's foot being placed thereon is located on the vehicle floor below the pedal which rotates forwardly and downwardly around the pedal's lower end. Herein, this step has the pressing-support shape which can maintain the proper support state of the heel of the driver's foot during the whole area of movable range of the pedal, so that the superior pedal pressing operation can be provided without the heel of the driver's foot rising off the step.

Moreover, as disclosed in Japanese Patent Laid-Open Publication No. 2001-1827, the foot moving restraint portion is known. That is, in order to protect the leg of the driver at a vehicle collision or the like, the foot moving restraint portion to restrain the lateral move of the foot relative to the pedal or the lateral move of the toe rotating around the heel is provided at a specified portion of the vehicle floor near the pedal, and the heel supporting portion to have the energy absorption function is provided at this foot moving restraint portion.

According to the pedal for a vehicle disclosed in the above-described first publication, since the side-face shape of the pedal pressing face is concave so that the contact of the back face of the driver's shoe with the pedal pressing face can be the face contact, so that the pressing operational function of the pedal can be improved. However, since the size of the driver seated in the driver's seat may change, it would be impossible to set the pedal's pressing face so that the curvature of the concave face of the pedal's pressing face could properly to all drivers who are possibly seated. For example, in case a short driver having a relatively-short foot's length is seated, the ball of the driver's footfoot may contact a specified portion which is located below the appropriate position of the pedal's pressing face, so that the pressing operational force may lack due to the insufficient lever ratio. Meanwhile, in case a tall driver having a relatively-long foot's length is seated, the ball of the driver's foot may contact the upper portion of the pedal body, so that it may be difficult to position the ball of the driver's foot at the pedal's pressing face, and thereby the driver may have uncomfortable feelings and the pedal pressing operation may deteriorate.

Meanwhile, according to the device in which the above-described step has the pressing-support shape with the upper face which comprises the first pressing face and the second pressing face as shown in the above-described second publication, the forward move of the heel of the driver's foot may be properly prevented at the time of pedal pressing by the engaging portion which is comprised of the pressing-support shape, so that advantages of the stable pressing operation of the pedal and the like may be provided. However, in case the engaging portion of the pressing-support shape is positioned between the pivot point at the lower end of the pedal and the heel point of the driver's foot, it may be difficult to make the moving locus of the back face of the driver's shoe which rotates around the heel placed on the vehicle floor match the moving locus of the pedal's pressing face which rotates around the hinge pin provided at the pedal's lower end. Accordingly, it may not be avoided despite using the above-described so-called organ type of pedal that the contact point of the back face of the driver's shoe with the pedal's pressing face changes improperly toward the tip of toes of the foot according to the pressing operation of the pedal, so that the pedal pressing operation would tend to deteriorate considerably.

Further, in case the heel supporting portion having the energy absorption function, which is made of a soft energy absorbing material with a specified thickness, is provided at the foot moving restraint portion as disclosed in the above-described third publication, the bending moment and the torsional moment which act toward the lower end of the knee from the right foot at the vehicle collision or the like can be reduced, and the axial force which acts toward the knee from the heel can be reduced as well. However, the above-described third publication does not disclose any countermeasure for improving the above-described pedal pressing operation's deterioration which may be caused especially in case of the short driver having the relatively-short foot's length, either. Thus, this improvement has been desired.

In general, the pedal is arranged at the appropriate position so that the average-sized driver can conduct the pedal pressing operation easily with a proper angle. Therefore, in case the relatively-short driver, who has the shorter foot length and shorter leg length compared with the relatively-tall driver, conducts the pedal pressing operation, the ankle's angle or the sole's inclination angle may become improperly different from the proper angles, so that the driver would not conduct the properly prompt pedal pressing operation. Or the heel of the operational foot of the driver may become improperly off the floor face, so that the driver would not conduct the stable pedal pressing operation.

The present invention has been devised in view of the above-described matters, and an object of the present invention is to provide a floor structure of a driver's seat for an automotive vehicle which comprises an accelerator pedal supported swingably at a support point with a rear end hinge portion thereof, which can provide the proper pedal pressing operation regardless of the foot's length of the driver.

The object is solved by the features of the independent claims. Preferred embodiments of the present invention are subject of the dependent claims.

According to the present invention, there is provided a floor structure of a driver's seat for an automotive vehicle, comprising an accelerator pedal supported swingably at a support point with a rear end hinge portion thereof, a floor mat provided to cover an upper face of a front portion of a floor panel located in front of the driver's seat, and an incline forming member provided at a specified portion of the floor mat located in back of a pressing-face board of the accelerator pedal, the incline forming member forming an incline portion at an upper face of a heel placing area on which a driver's heel is placed or placable, the incline portion being inclined so that a front portion thereof is positioned at a higher level than a rear portion thereof.

According to the present invention, the incline forming member is provided at the specified portion of the floor mat, which is provided to cover the upper face of the front portion of the floor panel located in front of the driver's seat, and located in back of the pressing-face board of the accelerator pedal, wherein the incline forming member forms the incline portion at the upper face of the heel placing area on which the driver's heel is placed and the incline portion is inclined so that its front portion is positioned at the higher level than its rear portion. Thereby, even the relatively-short driver who has the shorter foot's length compared with the average-sized driver can conduct the pressing operation of the accelerator pedal properly in the state in which the heel's lower end of the driver is placed on the incline portion and the ball of the driver's foot is made contact the appropriate position of the pressing portion of the accelerator pedal, maintaining the proper angles of the ankle's angle and the sole's inclination angle. That is, it can be prevented that the pedal pressing operation becomes inaccurate due to the heel's lower end being off the floor face or the pedal pressing operation becomes improperly slow due to the improper angles of the ankle's angle and the sole's inclination angle. Thus, the relatively-short driver can conduct the pressing operation of the accelerator pedal easily and properly with an appropriate lever ratio in the state in which the heel's lower end of the driver is placed on the incline portion near the lower end hinge portion of the pressing-face board and the ball of the driver's foot is made contact the appropriate position of the pressing portion of the accelerator pedal, maintaining the proper angles of the ankle's angle and the sole's inclination angle.

Preferably, said accelerator pedal is a so-called organ type of accelerator pedal which comprises an assembly of a pedal, biasing means, sensor, depressing amount restricting means and so on.

Further preferred, a hanging type of brake pedal is provided beside said accelerator pedal and supported swingably at a support point with an upper pivotal portion thereof.

According to an embodiment of the present invention, the incline forming member comprises a brake-pedal side extension portion which is provided beside the accelerator pedal and extends forwardly and upwardly with substantially the same inclination angle as that of the incline portion of the heel placing area on which the driver's heel is placed. Thereby, in case the relatively-short driver who has the shorter foot's length compared with the average-sized driver conducts the operation of the brake pedal, the relatively-short driver can conduct the pressing operation of the brake pedal properly in the state in which the heel's lower end of the driver is placed on the incline portion and the ball of the driver's foot is made contact the appropriate position of the pressing portion of the brake pedal, maintaining the proper angles of the ankle's angle and the sole's inclination angle. Moreover, the relatively-short driver can conduct the easy pedal pressing change between the accelerator pedal and the brake pedal by smoothly moving the foot's toes from the accelerator pedal to the brake pedal or reversely, keeping the heel's lower end of the driver placed on the incline portion. Further, since the brake-pedal side extension portion provided beside the accelerator pedal extends forwardly and upwardly further from a brake-pedal-side heel placing area on which the driver's heel is placed, it can be prevented that the heel becomes off the incline portion during the pressing operation of an urgent braking, for example, so that the stable pressing operation of the brake pedal can be provided, keeping the heel's lower end of the driver placed on the incline portion.

Herein, the above-described incline forming member may comprise a brake-pedal side extension portion which is provided beside the accelerator pedal and extends forwardly and upwardly with a specified inclination angle which is smaller than that that of the incline portion of the heel placing area on which the driver's heel is placed.

According to another embodiment of the present invention, an inclination angle of the incline portion of the heel placing area is set within a range of 13.5 through 23.5 degrees. Thereby, the pressing operation of the accelerator pedal can be conducted properly by making the ball of the driver's foot contact the appropriate position of the pressing portion of the accelerator pedal, keeping the heel's lower end of the driver placed on the incline portion.

According to another embodiment of the present invention, the incline forming member is made of a pad material which has a rigidity enough to support the heel of an operational foot of the driver at a normal state and a resilience enough to absorb an impact energy acting on the heel of the operational foot of the driver at a vehicle collision. Thereby, in case the driver's body is biased forwardly by the inertia force which is caused by the vehicle collision and thereby some reaction force acts on the heel of the driver pressing the accelerator pedal or the brake pedal, the incline forming member can be made properly deform. Accordingly, the impact load acting on the driver's heel from the vehicle floor and the like can be effectively reduced.

According to another embodiment of the present invention, the pressing-face board of the accelerator pedal includes a pressing portion which has a convex face which projects rearwardly of the vehicle, which a ball of an operational foot of the driver contacts a driver's pedal pressing. Thereby, the back face of the driver's shoe is made contact a point of the convex face of the pressing portion with a line contact. Accordingly, even in case the relatively-tall driver presses the accelerator pedal in a state in which the heel's lower end of the driver's foot is placed at a specified position which is located rearwardly from the rear support point of the pressing-face board, the contact position of the back face of the driver's shoe with the pressing portion can change smoothly and continuously according to the pressing of the accelerator pedal, so that the driver can be effectively prevented from having uncomfortable feelings.

According to another embodiment of the present invention, the floor structure further comprises a seat adjusting mechanism which moves the driver's seat in a longitudinal direction and reduces a rearward inclination angle of a seat cushion of the driver's seat in accordance with a forward move of the driver's seat. Thereby, the longitudinal position of the driver's seat and the inclination angle of the seat cushion are automatically adjusted so that the driver can keep its proper sitting position regardless of the body size, matching the driver's eye point to the appropriate line, and get the superior handle and pedal operations. Further, in case the sitting position of the driver seated in the driver's seat or the like change in accordance with the operation of adjusting the longitudinal position of the driver's seat and the inclination angle of the seat cushion of the driver's seat, since the incline portion is formed at the specified position on the floor panel near the driver's foot, even the relatively-short driver who has the shorter foot's length can conduct the pressing operation of the accelerator pedal and the like properly in the state in which the heel's lower end of the driver is placed on the incline portion and the ball of the driver's foot is made contact the appropriate position of the pressing portion of the accelerator pedal and the like, maintaining the proper angles of the ankle's angle and the sole's inclination angle. Thus, the proper pedal operation and the like can be provided.

Preferably, said incline forming member is arranged in a space which is formed by cutting out part of a back reinforcing material of the floor mat and/or a layer material covers an upper face of the incline forming member.

Preferably, said incline forming member comprises a foam including a mixture of polystyrene and polyethylene and a foaming ratio is preferably between twenty to forty, at the best between twenty and thirty.

According to a further aspect, there is provided a method of providing a floor structure of a driver's seat for an automotive vehicle, comprising the steps of:
supporting an accelerator pedal swingably at a support point with a rear end hinge portion thereof;
providing a floor mat to cover an upper face of a front portion of a floor panel located in front of the driver's seat; and
providing an incline forming member at a specified portion of said floor mat located in back of a pressing-face board of said accelerator pedal, the incline forming member forming an incline portion at an upper face of a heel placing area on which a driver's heel is placed or placable, the incline portion
being inclined so that a front portion thereof is positioned at a higher level than a rear portion thereof.

Other features, aspects, and advantages of the present invention will become apparent from the following description which refers to the accompanying drawings.
FIG. **1** is an explanatory diagram showing an embodiment of a floor structure of a driver's seat for an automotive vehicle according to the present invention.
FIG. **2** is a sectional view showing an arrangement structure of pedals.
FIG. **3** is a back-face sectional view taken along line of III-III of FIG. 2, which shows a specific structure of an accelerator pedal.
FIG. **4** is a perspective view showing a specific structure of the accelerator pedal.
FIG. **5** is a plan sectional view showing an attachment structure of a base member.
FIG. **6** is a sectional view taken along line VI-VI of FIG. **2****.**
FIG. **7** is a side view showing a specific structure of a seat adjusting mechanism.
FIG. **8** is a perspective view showing the specific structure of the seat adjusting mechanism.
FIG. **9** is a sectional view taken along line IX-IX of FIG. 7.
FIG. **10** is a side sectional view showing a specific structure of an inclination-angle adjusting mechanism.
FIG. **11** is a plan sectional view showing the specific structure of the inclination-angle adjusting mechanism.
FIG. **12** is a side view showing a state in which a seat cushion is moved forwardly in a vehicle.
FIG. **13** is a side view showing sitting states of an average-sized driver and a short driver.
FIG. **14** is an explanatory diagram showing respective states of heels of the average-sized driver and the short driver being placed.
FIG. **15** is a side view showing sitting states of a tall driver and the average-sized driver.
FIG. **16** is an explanatory diagram showing a state of a heel of the tall driver being placed.
FIG. **17** is a view showing a modification of the embodiment, which corresponds to FIG. **4****.**
FIG. **18** is a view showing the medication, which corresponds to FIG. **6**.

Hereinafter, a preferred embodiment of the present invention will be described referring to the accompanying drawings.

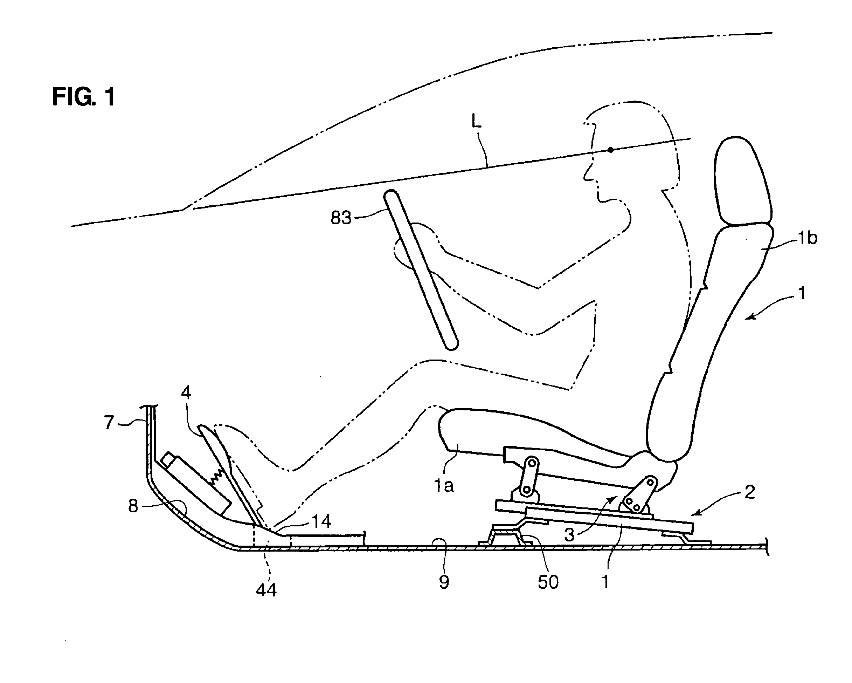

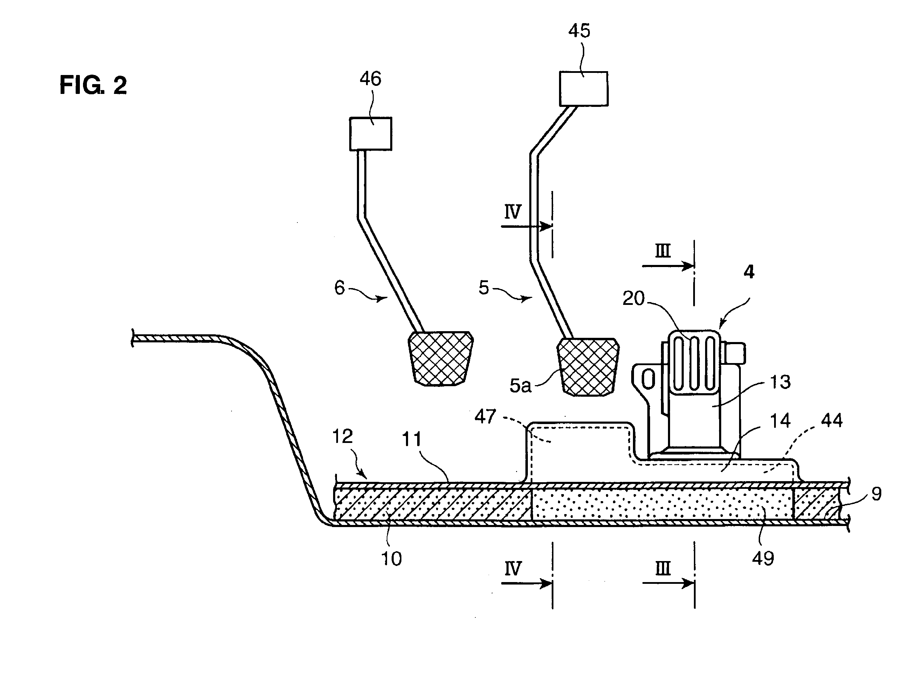

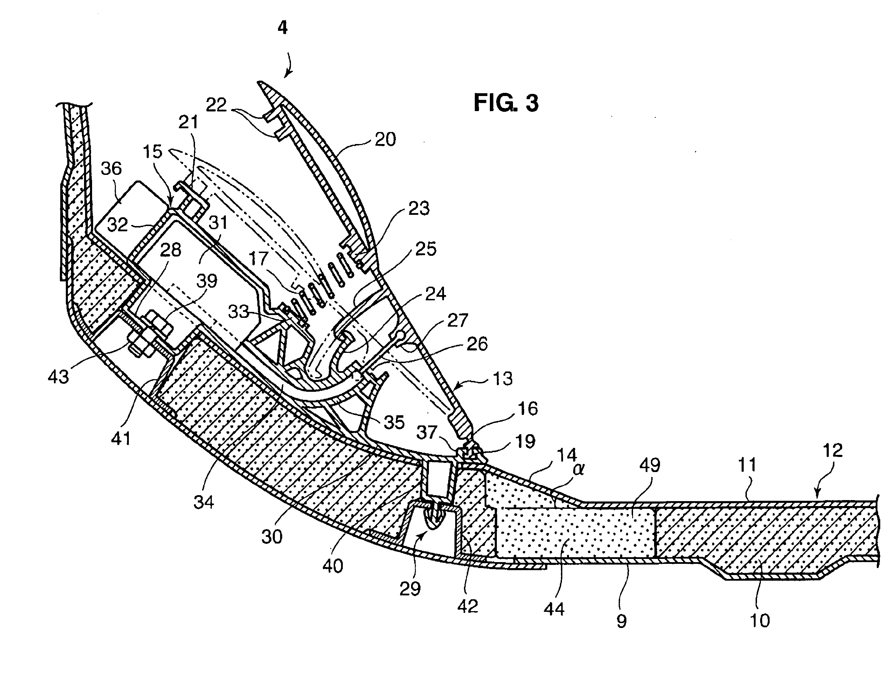

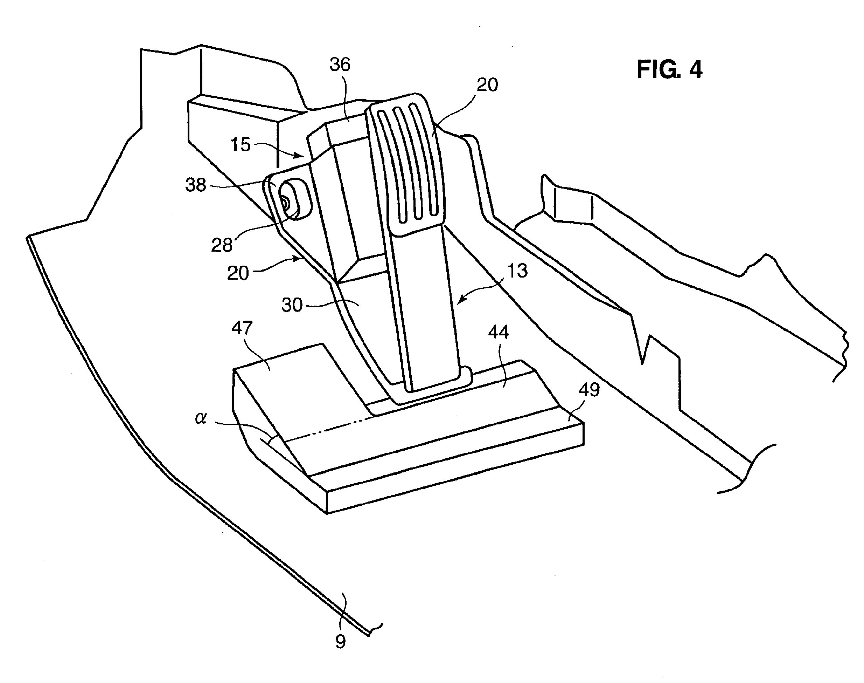

FIGS. **1** - **6** show an embodiment of a floor structure of a driver's seat for an automotive vehicle according to the present invention. The automotive vehicle is equipped with a seat adjusting mechanism which comprises a longitudinal-position adjusting mechanism **2** which adjusts a longitudinal position of a seat cushion **1a** of a driver's seat **1** provided in a vehicle compartment by making the seat cushion **1a** slide longitudinally, and an inclination-angle adjusting mechanism **3** which adjusts an inclination-angle of the seat cushion **1a.** Further, at a front portion in the vehicle compartment are preferably arranged an accelerator pedal **4,** a brake pedal **5,** and optionally a clutch pedal **6,** which are operated by a driver seated in a driver's seat **1.** A vehicle body of the automotive vehicle comprises a dash panel **7** which partitions the vehicle compartment from an engine room, a kick-up panel **8** which extends downwardly and rearwardly from a lower end of the dash panel **7** in an inclined state, and a floor panel **9** which extends rearwardly substantially horizontally from a rear end of the kick-up panel **8.**

A well-known floor mat **12,** which comprises a back reinforcing material **10** which is mainly made of material having functions of vibration proof, sound insulation, heat insulation and so on, such as melt sheet, felt, or glass wool, and a layer material **11** which covers over an upper face of the material **10** and is made of pile material, is arranged on an upper face of the floor panel **9.** An incline forming member **44** is provided at a specified portion of the floor mat **12** which is located in back of a pressing-face board **13** of the accelerator pedal **4,** which will be described later. This incline forming member **44** forms an incline portion **14** at an upper face of a heel placing area on which a driver's heel is placed. Herein, the incline portion **14** is inclined so that its front portion is positioned at a higher level than its rear portion.

The accelerator pedal **4** is comprised of an organ type of pedal unit, which comprises a base member **15** which is fixed to the kick-up panel **8** arranged in front of the floor panel **9,** a pressing-face board **13** which is supported at the base member **15** so as to swing around a lower-end hinge portion **16** in accordance with a pressing operation of the driver, a biasing member **17** which is comprised of a compressive coil spring or the like to bias the pressing-face board **13** rearwardly, and an accelerator-pedal operation detecting portion which detects a swinging displacement of the pressing-face board **13** and outputs its detection signal to a controller, not illustrated. The pressing-face board **13,** which is preferably made of a synthetic-resin plate member or the like, has its lower end portion which comprises the lower-end hinge portion **16** which has a thin thickness, and an engagement portion **19** which engages with an upper face of a rear portion of the base member **15.** The pressing-face board **13** includes at its upper portion a pressing portion **20** which has a convex face which projects rearwardly of the vehicle having a specified curvature, which a ball of an operational foot of the driver contacts a driver's pedal pressing.

On the back face of the pressing-face board **13** are preferably provided a projection portion **22** which restricts a forward move of the pressing-face board 13 by contacting a stopper portion **21** provided at the upper face of a front portion of the base member **15,** an upper-end support portion **23** which supports an upper end portion of the biasing member **17,** a restriction portion **25** which restricts a rearward move of the pressing-face board **13** by engaging with an engaging hook portion **24** provided at the upper face of a middle portion of the base member **15,** and a pivotal portion **27** at which an operational rod **26** of the above-described accelerator-pedal operation detecting portion is rotatably supported. Thus, the pressing-face board **13** is swingably supported at the support point with the rear end hinge portion **16** provided at the base member **15,** and it is held, at its normal state (non-operation state), in an inclined state having a specified angle relative to the horizontal line by the biasing force of the biasing member **17.**

The base member **15** preferably has a fixing base plate **30** equipped with first and second attachment portions **28, 29** for attaching to the kick-up panel **8.** Onto the upper face of the fixing base plate **30** are provided a storage portion **32** of a control box **31** in which preferably a linear sensor as the accelerator-pedal operation detecting portion is stored, a lower-end support portion **33** which supports a lower end portion of the biasing member **17,** and a guide portion **35** which supports a connection member **34,** which is preferably made of a flexible line-shaped member or the like and coupled to the lower end of the above-described operational rod **26,** so that the connection member **34** can slide.

A coupler **36** which connects a harness, not illustrated, to the control box **31** is preferably attached to a front face of the storage portion **32** of the control box **31,** and the above-described stopper portion **21** which the projection portion **22** of the pressing-face board **13** contacts is formed at the upper face of the storage portion **32** so as to project upwardly. Further, the above-described engaging hook portion **24** with which the restriction portion **25** of the pressing-face board **13** engages is preferably formed in front of the guide portion **35,** and an engagement portion **37** equipped with an engagement groove with which the engagement portion **19** of the pressing-face board **13** engages is preferably formed at a rear end portion of the fixing base plate **30.**

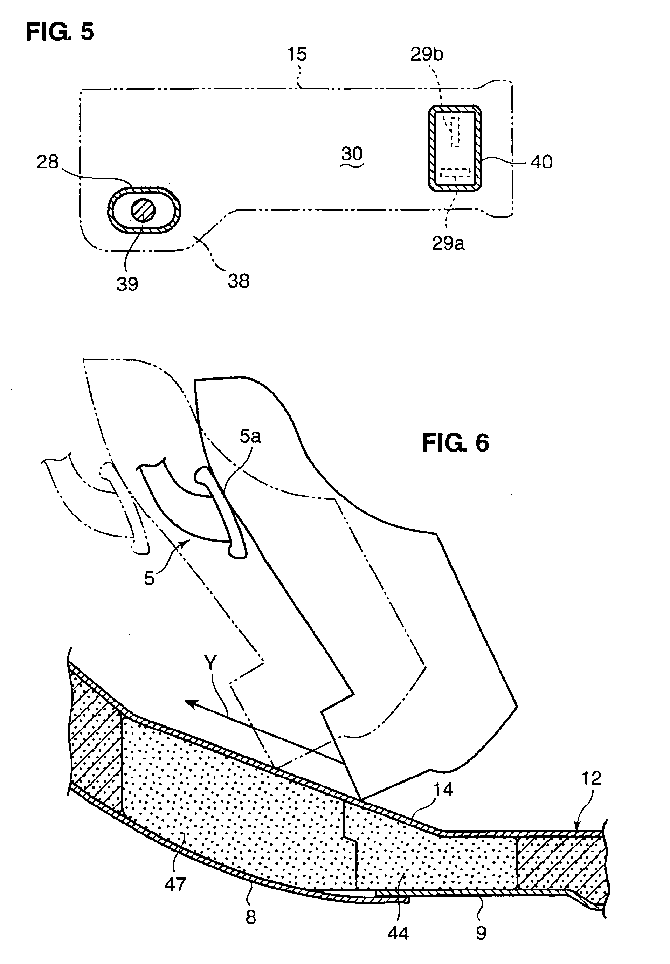

A side extension portion **38** is preferably formed at a front left side of the fixing base plate **30,** and a concave portion which is concaved downwardly is preferably formed at this side extension portion **38.** This concave portion constitutes the above-described first attachment portion **28.** A bolt through hole of a connecting bolt **39** is preferably formed at the bottom face of the first attachment portion **28.** Another concave portion **40** which is concaved downwardly is preferably formed at the back face of a rear end portion of the fixing base plate **30,** and a pair of clip engagement portions **29a, 29b** is preferably formed at the lower face of the concave portion **40** so as to project. The engagement portions **29a, 29b** constitute the above-described second attachment portion **29** (see FIG. **5****).** One of these engagement portions **29a** extends longitudinally (in the vehicle longitudinal direction), while the other **29b** extends laterally (in the vehicle width direction). The fixing base plate **30** can be fixed firmly and stably to the vehicle body by fixing these clip engagement portions **29a, 29b** to the kick-up panel **8.**

Hat-shaped first and second attached portions **41, 42,** to which the first and second attachment portions **28, 29** of the fixing base plate **30** are fixed, are preferably provided at the kick-up panel **8** to which the above-described base member **15** is attached. Some holes for arranging the first and second attachment portions **28, 29** are formed at the floor mat **12.** The connecting bolt **39** of the first attachment portion **28** is preferably screwed into a weld nut **43** which has been welded to a lower face of an upper wall of the first attached portion **41,** and the second attachment portions **29,** specifically the clip engagement portions **29a, 29b,** are preferably inserted into engagement holes formed at the second engaged portion **41.** Thereby, the base member **15** is attached to the kick-up panel **8,** and the pressing-face board **13** of the accelerator pedal **4** is arranged in front of the driver's seat 1 on the right side.

Further, the hanging type of brake pedal **5** is provided on the left side of the accelerator pedal **4** with a specified distance from the accelerator pedal **4,** and the hanging type of clutch pedal **6** is arranged in front of the driver's seat on the left side. These pedals **5, 6** are swingably supported at respective upper pivotal portions **45, 46** provided at the dash panel **7.**

On the floor mat **12** which is arranged so as to cover the upper face of the portion of the floor panel **9** located in front of the driver's seat **1** is formed the incline portion **14** by providing the incline forming member **44** below the layer material **11.** The incline portion **14** is located in back of the pressing-face board **13** of the accelerator pedal **4** and inclined in such a manner that the front portion of the upper face (layer material **11**) of the heel placing area, on which the driver's heel is placed, is positioned at the higher level than its rear portion. The incline forming member **44** is made of a pad material, such as urethane foam or synthetic rubber, which has the rigidity enough to support the heel of the driver's operational foot at the normal state and the resilience enough to absorb the impact energy acting on the heel of the driver's operational foot at the vehicle collision. Further, the incline forming member **44** is formed in a shape in which the thickness of the front portion is greater than that of the rear portion, that is, an inclination angle α of the upper face of the heel placing area set within a range of 13.5 through 23.5 degrees is formed.

The incline forming member **44** is configured to extend toward the brake pedal **5** so that an upper face of the heel placing area for the brake pedal **5** is also formed in back of a pressing portion **5a** of the brake pedal **5.** That is, the incline forming member **44** comprises a brake-pedal side extension portion **47** which is provided beside the accelerator pedal **4** and extends forwardly and upwardly below the brake pedal **5** with substantially the same inclination angle as that of the incline portion **14** of the heel placing area on which the driver's heel is placed as shown in FIG. **6****.** Moreover, a rear extension portion **49** which has a horizontally-extending upper face is preferably formed at a rear of the incline forming member **44.**

The incline forming member **44** is arranged in a space which is formed by cutting out part of the back reinforcing material **10** of the floor mat **12,** and the layer material **11** covers over the upper face of the incline forming member **44.** Thus, the incline portion **14** is provided so as to form the driver's heel placing area of the upper face of the floor mat **12** with the inclination angle α which extends over an area behind the pressing-face board **13** of the accelerator pedal **4** and the pressing portion **5a** of the brake pedal **5.**

In the above-described structure, when the driver conducts the pressing operation of the pressing-face board **13** in the state in which the ball of the driver's foot placed on the incline portion **14** contacts the pressing portion **20** of the pressing-face board **13,** the pressing-face board **13** swings forwardly around the lower-end hinge portion **16** against the biasing force of the biasing member **17.** The pressing force applied to the pressing-face board **13** is transmitted to the linear sensor of the control box **31** via the operational rod **26** and the connection member **34.** Thereby, the operational value of the pressing-face board **13** is detected, and its detection signal is outputted to an engine control unit from the control box **31** via the coupler **36** and the harness, not illustrated.

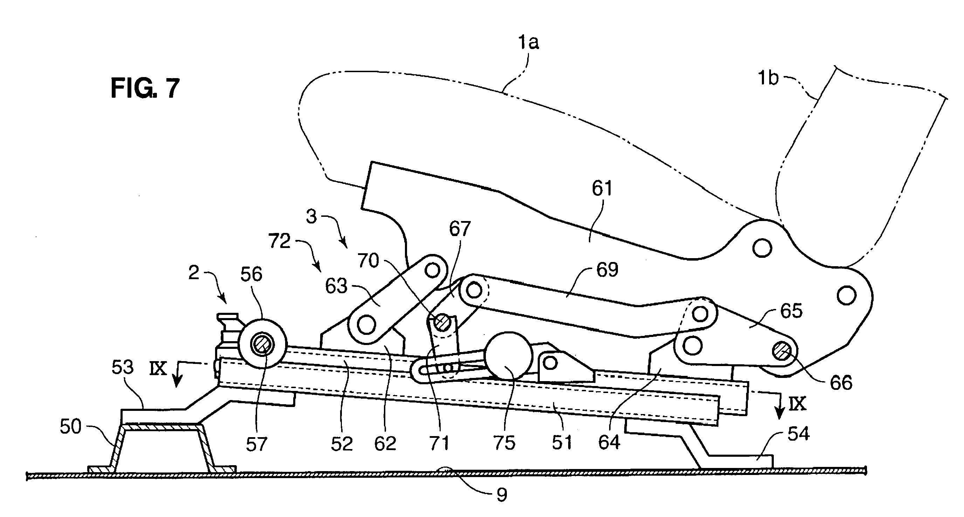

As shown in FIGS. **7** through **9****,** a pair of seat-slide lower rails **51** which supports the seat cushion **1 a** so that the seat cushion **1 a** can move longitudinally is provided at the disposition portion of the driver's seat **1,** and a pair of seat-slide upper rails **52** is provided so as to slide along the seat-slide lower rails **51.** The seat-slide lower rails **51** is preferably made of a C-type steel member or the like which has an opening on the top thereof, and attaching brackets **53, 54** are preferably fixed to their both longitudinal ends by welding or the like. These brackets **53, 54** are preferably fixed to an upper face of a cross member **50** and the like by fastening bolts or the like, so that the seat-slide lower rails **51** is disposed on the vehicle floor **9** in an inclined state in which the level of its front portion is slightly higher.

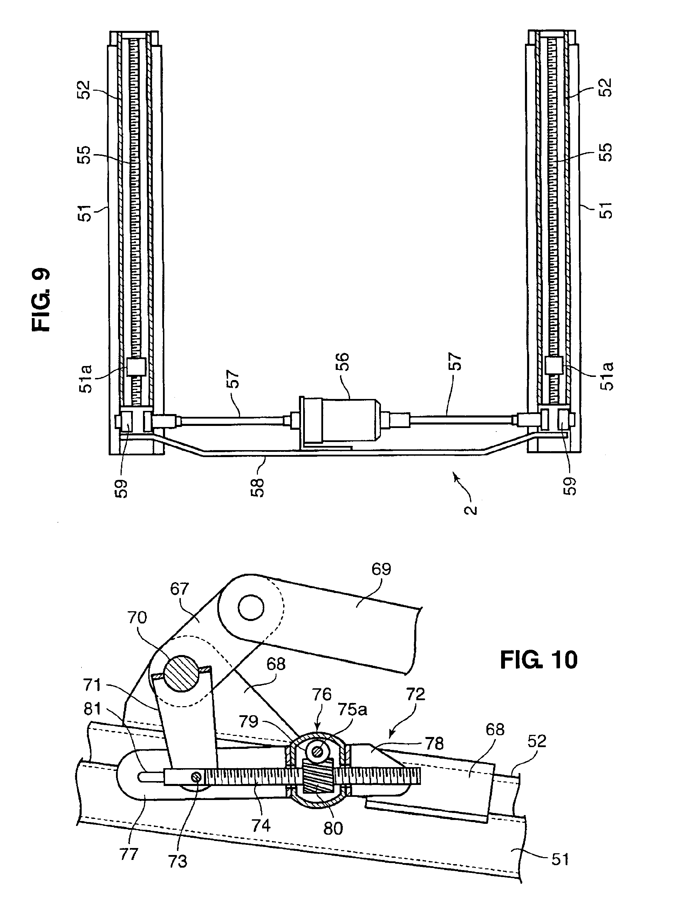

As shown in FIG. **9**, a thread rotational shaft **55** is preferably disposed inside each of the seat-slide lower rails **51,** and a pair of drive shafts **57** which is rotated by a drive motor **56** and a support member **58** which supports the drive shafts **57** are provided respectively so as to extend substantially in a vehicle width direction between both front ends of the seat-slide upper rails **52.** At both-side end portions of the drive shafts **57** are preferably provided drive-force transmitting portions **59** which transmit a drive force to the rotational shafts **55** via a mechanism which comprises bevel gears or worm gears or the like.

The above-described seat-slide lower rails **51,** seat-slide upper rails **52,** rotational shaft **55,** drive motor **56,** drive shaft **57** and drive-force transmitting portion **59** constitute the longitudinal-position adjusting mechanism **2** together with a pair of nut blocks **51a** which is fixed to respective bottom portions of the seat-slide lower rails **51** and engages with the respective rotational shafts **55.** The longitudinal-position adjusting mechanism **2** adjusts the longitudinal position of the driver's seat **1** by making the seat cushion **1a** of the driver's seat **1** slide along the seat-slide lower rails **51.**

For example, when a longitudinal adjusting switch, not illustrated, is operated for a forward moving, a control signal to rotate the drive motor **56** in its normal direction is outputted and the drive motor **56** is rotated in the normal direction by this control signal. Thereby, the drive force for moving the seat cushion **1a** forwardly is transmitted to the drive shafts **57,** drive-force transmitting portions **59,** and rotational shafts **55.** The rotational shafts **55** are rotated by the drive force inputted via the drive-force transmitting portions **59** in the state in which these shafts **55** are supported at the nut blocks **51a** which are fixed to the bottom portions of the seat-slide lower rails **51,** so that the rotational shafts **55** proceed forwardly. Consequently, the seat-slide upper rails **52** and thereby the seat cushion **1a** of the driver's seat **1** are moved forwardly.

Meanwhile, when the longitudinal adjusting switch is operated for a rearward moving, a control signal to rotate the drive motor **56** in its reverse direction is outputted and the drive motor **56** is rotated in the reverse direction by this control signal. Thereby, the drive force for moving the seat cushion **1a** rearwardly is transmitted to the drive shafts **57,** drive-force transmitting portions **59,** and rotational shafts **55.** The rotational shafts **55** are rotated by the drive force, so that the rotational shafts 55 proceed rearwardly. Consequently, the seat-slide upper rails **52** and thereby the seat cushion **1a** of the driver's seat **1** are moved rearwardly.

Further, since the seat-slide lower rails **51** is disposed on the vehicle floor **9** in the inclined state in which the level of its front portion is slightly higher, the seat cushion **1 a** is pushed upwardly as the seat-slide upper rails **52** and the seat cushion **1 a** of the driver's seat **1** move forwardly along the seat-slide lower rails **51.** On the contrary, the seat cushion **1a** is lowered as the seat-slide upper rails **52** and the seat cushion **1a** of the driver's seat **1** move rearwardly along the seat-slide lower rails **51.**

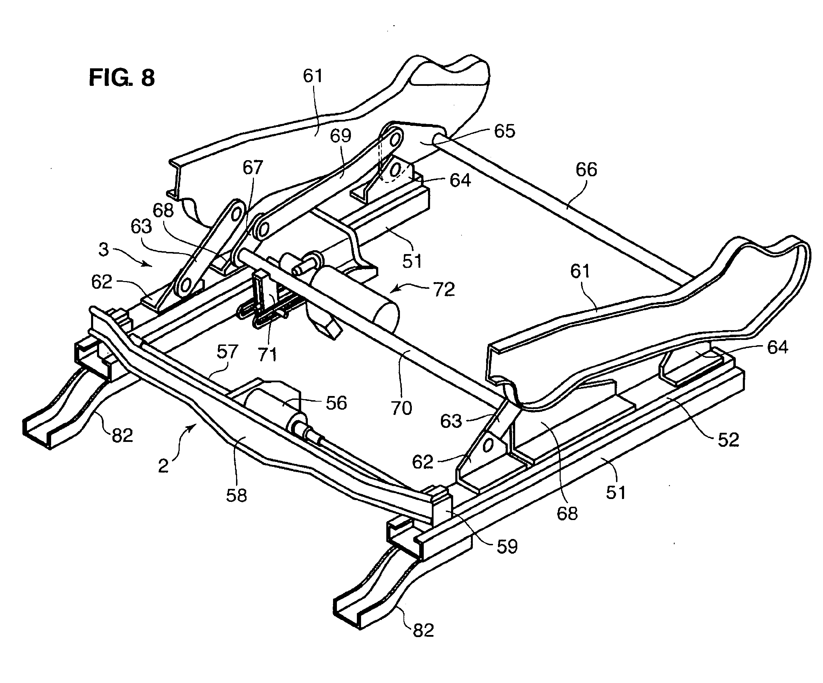

Moreover, at each of the seat-slide upper rails **52** is preferably provided the inclination-angle adjusting mechanism **3** which adjusts the inclination angle of the seat cushion **1a** of the driver's seat **1.** The inclination-angle adjusting mechanism **3,** as shown in FIGS. **7** and **8****,** preferably comprises a cushion frame **61** which is provided at a side portion of the seat cushion **1a,** a front bracket **62** and a front link **63** which are provided on a front upper face of the seat-slide upper rail **52** and supports a front end of the cushion frame **61,** a rear bracket **64** and a triangular-shaped rear link **65** which are provided on a rear upper face of the seat-slide upper rail **52** and supports a rear portion of the cushion frame **61,** a connecting shaft **66** which interconnects rear end portions of the both-side rear links **65** and rear end portions of the both-side cushion frames **61,** a center link **67** which transmits a drive force to the rear link **65** and a center bracket **68** which is provided on a central upper face of the seat-slide upper rail **52** and supports this center link **67,** a connecting link **69** which connects an upper portion of the central link **67** to a front end of the rear link **65,** a drive shaft **70** which will be described below, and a drive lever **71** and an inclination drive portion **72.**

The central link **67** is fixed to the drive shaft **70** which preferably extends in the vehicle width direction at its end portion, and this link **67** is rotatably supported at the central bracket **68** via the drive shaft **70.** The drive lever **71** which rotates the drive shaft **70** is fixed to the drive shaft **70.** Herein, the above-described inclination drive portion **72** which drives this drive lever **71** is provided at the central bracket **68** which is fixed to either one of the seat-slide upper rails **52** (one on the outward side).

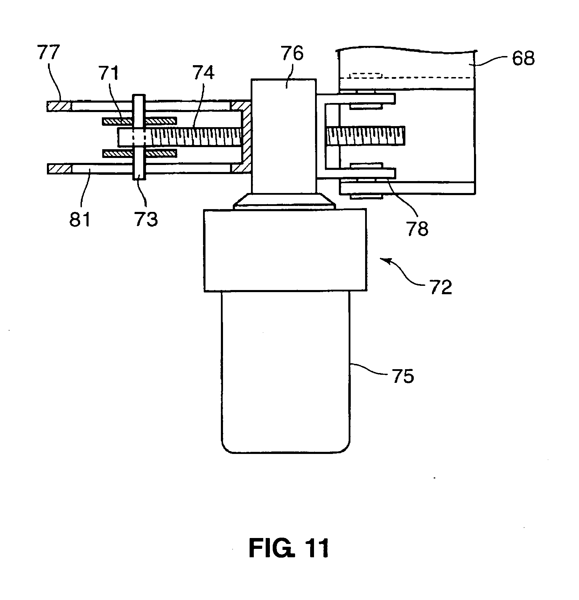

The inclination drive portion **72** preferably comprises, as shown in FIGS. **10** and **11****,** a screw shaft **74** which is connected to a tip (lower end) of the drive lever **71** via a connecting pin **73** at its front end, a drive motor **75** to rotate the screw shaft **74** and a gear mechanism **76,** and a guide bracket **77** which is fixed to a front face of the gear mechanism **76** and a base end of which is supported at the central bracket **68** via a support bracket **78.** Further, the gear mechanism **76** comprises a worm gear **79** which is fixed to an output shaft **75a** of the drive motor **75** and a worm nut **80** which is rotated by the worm gear **79.** The worm nut **80** has a screw hole formed thereat which the screw shaft **74** engages with.

Herein, as the worm nut **80** is rotated by the drive force which is inputted from the drive motor **75** via the worm gear **79,** the screw shaft **74** is rotated. Thereby, the connecting pin **73** at the tip of the screw shaft **74** moves longitudinally along a support groove **81** which is formed at the guide bracket **77,** and the drive force is transmitted to the drive lever **71** via the connecting pin **73.** Accordingly, the drive lever **71** swings and thereby the drive shaft **70** is rotated.

Further, the central link **67** swings according to the rotation of the drive shaft **70,** and the rotational drive force is transmitted to the rear link **65** via the connecting link **69.** As the rear link **65** swings, the front link **63** also swings. Consequently, the inclination angle of the seat cushion **1a** can be adjusted. That is, when the seat cushion **1a** of the driver's seat **1** moves to its rear position, as shown in FIG. **7****,** the front link **63** and the central link **67** take a their rearward slant positions and the connecting shaft **66** which is provided at the rear end of the rear link **65** takes its lower position. Consequently, a sitting face of the seat cushion **1a** is held in its slant state in which its rear portion lowers greatly.

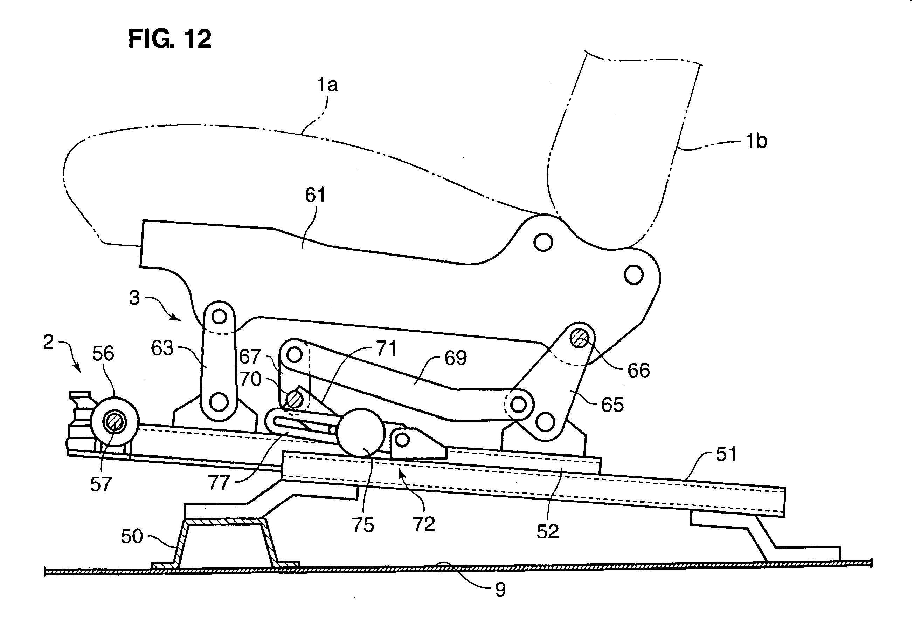

According to the above-described structure, when the forward moving operation of the driver's seat **1** with the longitudinal adjusting switch is conducted, the control signal for rotating the drive motor **75** of the inclination-angle adjusting mechanism **3** in the normal direction is outputted from the controller, not illustrated, based on preset drive characteristics. The driving force of the normal-direction rotation of the drive motor **75** is transmitted to the central link **67** via the gear mechanism **76,** screw shaft **74,** connecting pin **73,** drive lever **71** and drive shaft **70,** and thereby the central link **67** changes its position from the rearward slant state to its standing state which is shown in FIG. **12****.** According to this position change of the central link **67** to the standing state, the drive force is transmitted to the rear link **65** via the connecting link **69,** and the front end of the rear link **65** is pulled forwardly. Accordingly, the connecting shaft **66** which is provided at the rear end of the rear link **65** rises up, so that the rear end portion of the seat cushion **1a** is pushed upwardly.

Further, since the front link **63** moves from its rearward slant state to its standing state according to the swing move of the rear link **65,** the seat cushion **1a** moves in such a manner that its front end portion rises and moves forwardly, so that the seat cushion **1a** moves from the lower position to the upper position shown in FIG. **12****.** Herein, since the upper move quantity of the rear end portion of the seat cushion **1a** is set to be greater than that of the front end portion of the seat cushion **1a,** the seat cushion **1a** moves so as to approach a horizontal state gradually. Depending on this move of the seat cushion **1a,** the seat back **1b** moves so as to approach its upright position.

Meanwhile, when the rearward moving operation of the driver's seat **1** with the longitudinal adjusting switch is conducted, the control signal for rotating the drive motor **75** of the inclination-angle adjusting mechanism **3** in the reverse direction is outputted from the controller, not illustrated, based on preset drive characteristics. The driving force of the reverse-direction rotation of the drive motor **75** is transmitted to the central link **67** via the gear mechanism **76,** screw shaft **74,** connecting pin **73,** drive lever **71** and drive shaft **70.** Accordingly, as shown in FIG. **7****,** the seat cushion **1 a** changes from the upper position to the lower position. Herein, the drive characteristics are set in such a manner that the rearward inclination angle of the sitting face of the seat cushion **1a** increases and the seat back **1b** slants rearward greatly depending on the lowering of the seat cushion **1a.**

Herein, if the driver seated in the driver's seat **1** changes to a different driver having a different height, the eye point of the driver seated, operational functions for the operational pedals and the like may change because the driver's sitting height, the length of the driver's arm, the length of the driver's leg and the like change as well. Therefore, the new driver may try to operate the longitudinal-position adjusting mechanism **2** and the inclination-angle adjusting mechanism **3** to adjust the driver's position so that the driver can hold a steering wheel **83** in the properly comfortable position, make the ball of the driver's foot properly contact the pressing portion **20** of the pressing-face board **13** of the accelerator pedal **4,** and the clear front view of the driver can be ensured by matching the driver's eye point to an appropriate line L.

The drivers with the height within the range of 150 to 190cm may be seated in the driver's seat **1,** so it is necessary that any driver can be seated in the seat **1** having the comfortable sitting position and conduct the driving operation properly. Herein, the statistical analysis on the appropriate position for the average-sized driver M with the height of 174cm was conducted, and the results below were obtained.

Herein, the comfortable position of the driver seated in the driver's seat **1** means a sitting position which can make the driver keep the sitting state for a long period of time and also suit for operating the steering wheel, pedals and so on. Specifically, as shown in FIG. **12****,** the angle of ankle θ1 is about 85 to 95 degrees, the angle of knee θ2 is about 115 to 135 degrees, and the bending angle θ3 between the upper half body and the thigh portion is about 95 degrees. Further, it has been recognized from the human-technology tests that the appropriate angle of the thigh angle θ4 relative the horizontal line for the average-sized driver M is an angle which is obtained by adding about 1.5 degrees to the inclination angle of the seat cushion **1a.** Further, the elbow angle θ5 which can provide the proper operation of steering wheel **83** is about 100 to 130 degrees, and the armpit portion angle θ6 is about 20 to 45 degrees.

Accordingly, the longitudinal standard position and the vertical standard position of the seat cushion **1a** are set so that when the above-described average-sized driver M is seated in the driver's seat in a state, for example, in which the ankle angle θ1 is 90 degrees, the knee angle θ2 is 125 degrees, the bending angle θ3 between the upper half body and the thigh portion is about 95 degrees, and the thigh angle θ4 is 17 degrees, the eye point Im of the average-sized driver M can be made match the appropriate line L which has the inclination angle of 8 degrees.

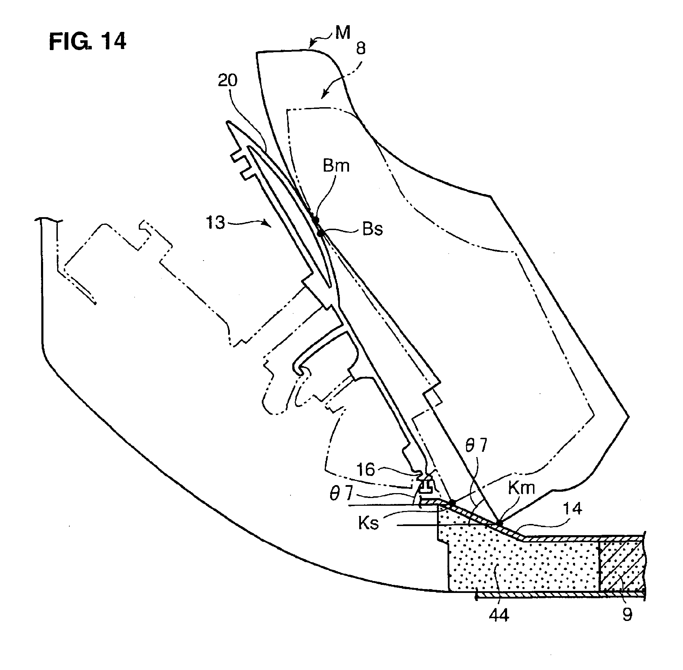

According to the above-described standard sitting state of the average-sized driver M, the elbow angle θ5 and the armpit portion angle θ6 are set within the above-described respective ranges so that the driver can hold the steering wheel **83** properly. Further, as shown in FIG. **14****,** the accelerator pedal **4** is disposed at an appropriate position of the pressing portion **20** of the pressing-face board **13** of the accelerator pedal **4,** that is, at a position which can make the ball of the foot Bm of the driver's foot contact the central position of the pressing portion **20,** in a state in which a heel's lower end Km of the driver's foot on the pedal is placed on the above-described incline portion **14** and the inclination angle θ7 of the sole relative to the horizontal line is about 59.5 degrees, for example.

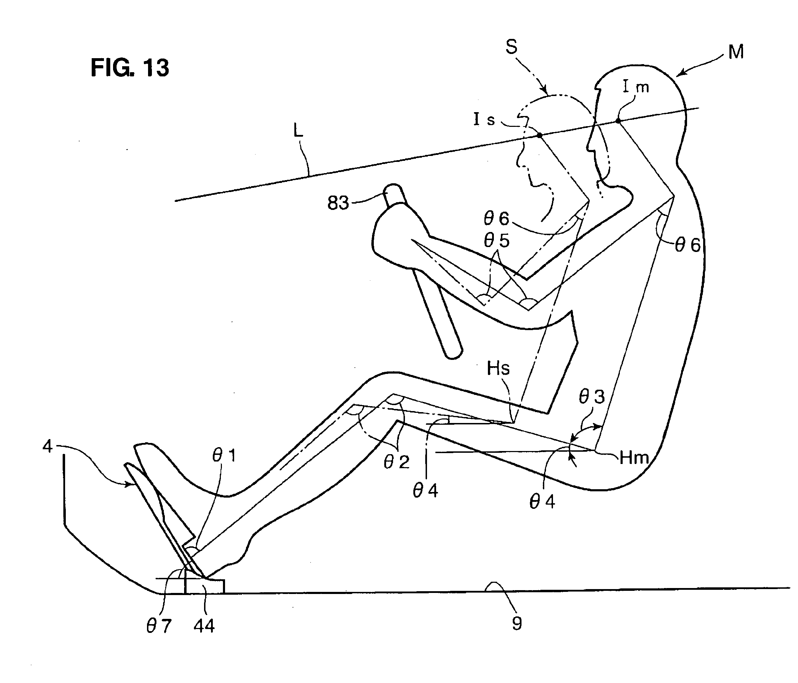

In FIG. **13****,** a reference character Hm denotes the hip point (sitting standard point) of the average-sized driver M seated in the driver's seat **1.** Further, the standard disposition position of the heel's lower end Km of the average-sized driver M is set to a specified position which is 5mm upward away from the lower end of the incline portion **14,** that is, near the rear end of the incline portion **14.**

Meanwhile, when the driver seated in the driver' seat **1** changes from the average-sized driver M to the short driver S, such as an woman deriver, as shown by a broken line in FIG. **13****,** this short driver S may operate the longitudinal-position adjusting mechanism **2** and the inclination-angle adjusting mechanism **3** to move the seat cushion **1a** forwardly so that the operational functions of the steering wheel and the pedal can be ensured and the eye point Is can be matched to the appropriate line L. Further, the driver S may operate to raise the disposition level of the seat cushion **1a** and reduce the inclination angle of the seat cushion **1a** relative to the horizontal line accordingly.

For example, when the short driver S with the height of 150cm is seated in the driver's seat **1,** the short driver S operates so as to move the hip point Hs on the seat cushion **1a** forwardly about 105mm from the longitudinal standard position Hm of the average-sized driver M and upwardly about 25mm, and to change the inclination angle of the seat cushion **1a** so that the thigh angle θ4 can be about 10.5 degrees. As a result, the upper half body of the short driver S who has a shorter arm than that of the average-sized driver M is moved forwardly so that the steering wheel **83** can be held in the appropriate position, and the eye point Is of the short driver S who has a shorter sitting height than that of the average-sized driver M is moved upwardly and forwardly so that the eye point Is can match the appropriate line L.

Moreover, there is a tendency that the pedal-operating foot of the short driver S moves upwardly and forwardly according to the upward and forward move of the seat cushion **1a.** Therefore, by increasing the knee angle θ2 to about 130 degrees accordingly, the ball of the foot Bs of the short driver S can be made contact the pressing portion **20** of the accelerator pedal **4,** keeping the ankle angle θ1 at about 90 degrees.

Since the distance (about 160mm) from the heel's lower end Ks of the short driver S to the ball of the foot Bs is about 30mm shorter than that (about 190mm) of the average-sized driver M, in order that the ball of the foot Bs is made contact the pressing portion **20** of the accelerator pedal **4,** keeping the sole's inclination angle θ7 of the short driver S at the angle which is the same as that (59.5 degrees) of the average-sized driver, the heel's lower end Ks is located at a level which is about 26mm (= sin 59.5 degrees x 30mm) higher than the heel's lower end Km of the average-sized driver M. Therefore, unless the heel's lower end Ks of the short driver S is located above off the floor panel **9,** the ball of the foot Bs of the short driver S may not be made contact the appropriate position of the pressing portion **20** surely. Meanwhile, in case the heel's lower end Ks of the short driver S is located above off the vehicle floor **8,** it may be difficult to operate the pedal precisely with the pivotal move around the heel's lower end Ks.

However, in case the upper face's inclination angle β of the incline portion **14** is set to 20 degrees, for example, within the range of 13.5 to 23. 5 degrees like the above-described embodiment, by changing the sole's inclination angle θ7 of the short driver S from 59.5 degrees to about 67 degrees and moving the heel's lower end Ks about 27mm forwardly from the standard position on the incline portion **14** (the disposition position of the heel's lower end Km of the average-sized driver M), the ball of the foot Bs can be made contact the appropriate position of the pressing portion **20** of the accelerator pedal **4** in the state in which the heel's lower end Ks is placed at the specified position on the incline portion **14** which is located about 15mm above the floor panel **9.**

Herein, there is a tendency that the ankle angle θ1 of the foot becomes smaller than 90 degrees as the sole's inclination angle θ7 changes from 59.5 degrees to 67 degrees. However, by increasing the knee angle θ2 of the short driver S to a specified angle greater than 130 degrees so that the knee can extend further according to the increase of the sole's inclination angle θ7 (see the broken line in FIG. **13****),** it can be prevented that the ankle angle θ1 becomes smaller beyond the appropriate range, for example, smaller than 85 degrees.

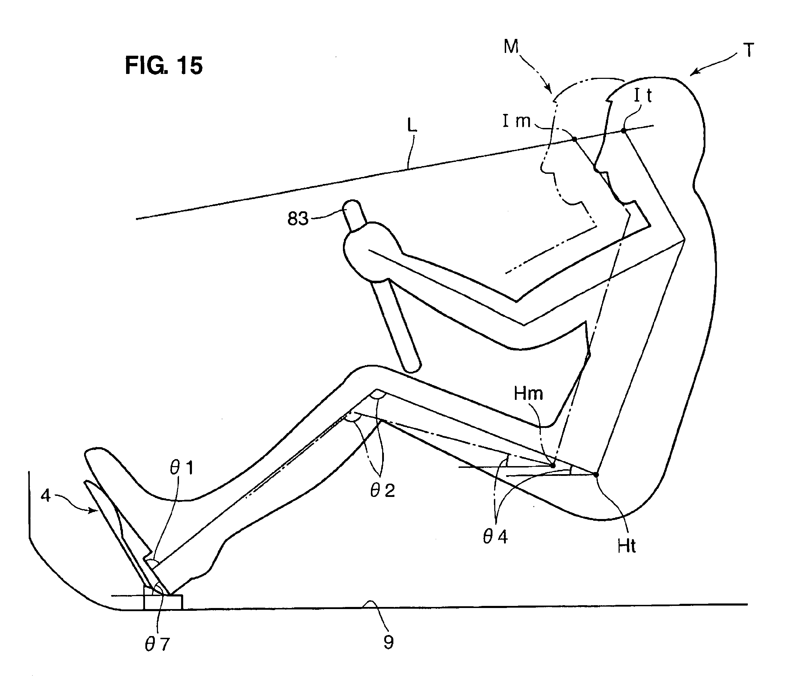

Meanwhile, when the tall driver T with the height of 189cm is seated in the driver's seat 1, for example, as shown in FIG. **15****,** the tall driver T operates so as to move the hip point Ht on the seat cushion **1a** rearwardly about 85mm from the longitudinal standard position Hm of the average-sized driver M and downwardly about 20mm, and to change the inclination angle of the seat cushion **1a** so that the thigh angle θ4 can become about 20.0 degrees. As a result, the upper half body of the tall driver T who has a longer arm than that of the average-sized driver M is moved rearwardly so that the steering wheel **83** can be held in the appropriate position, and the eye point It of the tall driver T who has a longer sitting height than that of the average-sized driver M is moved downwardly and rearwardly so that the eye point It can match the appropriate line L.

Moreover, there is a tendency that the pedal-operating foot of the tall driver T moves downwardly and rearwardly in accordance with the downward and rearward move of the seat cushion **1a.** Therefore, by decreasing the knee angle θ2 to about 120 degrees accordingly, the ball of the foot Bt of the tall driver T can be made contact the pressing portion **20** of the accelerator pedal **4**, keeping the ankle angle θ1 at about 90 degrees.

Since the distance (about 206mm) from the heel's lower end Kt of the tall driver T to the ball of the foot Bt is about 16mm longer than that (about 190mm) of the average-sized driver M, in case the heel's lower end Kt is disposed at the same position, keeping the sole's inclination angle θ7 of the tall driver T at the same angle (59.5 degrees), it may be necessary that the contact position of the ball of the foot Bt to the pressing portion 16 of the accelerator pedal 4 is lowered by about 14mm (= sin 59.5 degrees x 16mm) than that of the average-sized driver M.

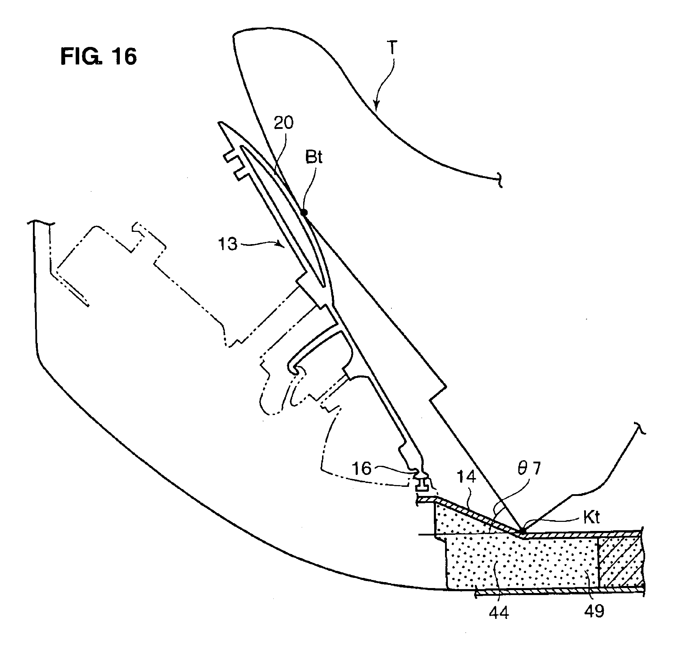

In the above-described embodiment, by changing the sole's inclination angle θ7 of the tall driver T from 59.5 degrees to about 57 degrees and moving the heel's lower end Kt onto the substantially horizontal plane, specifically, onto the rear extension portion 49 of the incline forming member **44,** which is located at the rear end of the incline portion **14** as shown in FIG. **16****,** the rear the ball of the foot Bt can be made contact the appropriate position of the pressing portion **20** of the accelerator pedal **4.** Herein, there is a tendency that the ankle angle θ1 of the foot becomes greater than 90 degrees as the sole's inclination angle θ7 changes from 59.5 degrees to 57 degrees. However, by decreasing the knee angle θ2 of the tall driver T to a specified angle smaller than 120 degrees so that the knee can bend according to the decrease of the sole's inclination angle θ7 (see FIG. **15**)**,** it can be prevented that the ankle angle θ1 becomes greater beyond the appropriate range, for example, greater than 95 degrees.

According to the above-described floor structure of the driver's seat for the automotive vehicle which comprises the accelerator pedal **4, preferably the** organ type of accelerator pedal, which is supported swingably at the support point with the lower-end hinge portion **16,** preferably the hanging type of brake pedal **5** which is provided beside the accelerator pedal **4** and supported swingably at the support point with the upper pivotal portion **45,** the floor mat **12** which is provided so as to cover the upper face of the front portion of the floor panel **9** which is located in front of the driver's seat **1,** and the incline forming member **44** which is provided at the specified portion of the floor mat **2** which is located in back of the pressing-face board **13** of the accelerator pedal **4,** the incline forming member **44** forming the incline portion **14** at the upper face of the heel placing area on which the driver's heel is placed, the incline portion **14** being inclined so that its front portion is positioned at the higher level than its rear portion, even the short driver S who has the shorter foot's length compared with the average-sized driver M can conduct the pressing operation of the accelerator pedal **4** properly in the state in which the heel's lower end Ks of the driver is placed on the incline portion **14** and the ball of the driver's foot Bs is made contact the appropriate position of the pressing portion **20** of the accelerator pedal 4, maintaining the proper angles of the ankle's angle θ1 and the sole's inclination angle θ7.

Accordingly, it can be prevented that the pedal pressing operation becomes inaccurate due to the heel's lower end Ks being off the floor face or the pedal pressing operation becomes improperly slow due to the improper angles of the ankle's angle θ1 and the sole's inclination angle θ7. Thus, as shown by the broken line in FIG. **14****,** the short driver S can conduct the pressing operation of the accelerator pedal **4** easily and properly with the appropriate lever ratio in the state in which the heel's lower end Ks of the driver S is placed on the incline portion **14** near the lower end hinge portion **16** of the pressing-face board **13** and the ball of the driver's foot Bs is made contact the appropriate position of the pressing portion **20** of the accelerator pedal **4.**

Meanwhile, in case of the tall driver T, as shown in FIGS. **15** and **16****,** by decreasing the sole's inclination angle θ7 of the driver's foot and the knee angle θ2, the ball of the driver's foot Bt can be made contact the appropriate position of the pressing portion **20** easily and properly, without lowering the heel's lower end Kt. Accordingly, even if the tall driver T sets the area where the driver's heel lower end Kt is placed to the substantially-horizontal floor mat **12,** the operational function of the accelerator pedal **4** may not deteriorate. Further, by the tall driver T setting the driver's heel lower end Kt on the floor panel **9** at the rear end portion of the incline portion **14,** the tall driver T can be made recognize easily that the rear end portion of the incline portion **14** is the area where the driver's heel lower end Kt should be placed.

According to the above-described embodiment, the incline forming member **44** preferably comprises the brake-pedal side extension portion **47** which is provided beside the accelerator pedal **4** and extends forwardly and upwardly for the brake pedal **5** with substantially the same inclination angle as that of the incline portion **14** of the heel placing area on which the driver's heel is placed. Thereby, in case the short driver S who has the shorter foot's length compared with the average-sized driver M conducts the operation of the brake pedal **5**, the short driver S can conduct the pressing operation of the brake pedal **5** properly in the state in which the heel's lower end Ks of the driver is placed on the incline portion **14** and the ball of the driver's foot Bs is made contact the appropriate position of the pressing portion **5a** of the brake pedal **5,** maintaining the proper angles of the ankle's angle θ1 and the sole's inclination angle θ7.

Accordingly, it can be prevented that the pedal pressing operation by the short driver S becomes inaccurate due to the heel's lower end Ks being off the floor face or the pedal pressing operation becomes improperly slow due to the improper angles of the ankle's angle θ1 and the sole's inclination angle θ7. Thus, the short driver S can conduct the pressing operation of the brake pedal **5** properly. Moreover, the short driver S can conduct the easy pedal pressing change between the accelerator pedal **4** and the brake pedal **5** by smoothly moving the foot's toes from the accelerator pedal to the brake pedal or reversely, keeping the heel's lower end Ks of the driver placed on the incline portion **14.**

Especially, since the brake-pedal side extension portion **47** provided beside the accelerator pedal **4** extends forwardly and upwardly further from the brake-pedal-side heel placing area on which the driver's heel is placed, it can be prevented that the heel becomes off the incline portion **14** during the pressing operation of an urgent braking, for example, so that the stable pressing operation of the brake pedal 5 can be provided, keeping the heel's lower end of the driver placed on the incline portion **14,** as shown by an arrow Y in FIG. **6****.**

That is, in case the brake-pedal side extension portion **47** is not provided so that the incline portion **14** on the side of the brake pedal **5** has the same length as that on the side of the accelerator pedal **4,** the heel may become off the incline portion **14** during the pressing operation of the urgent braking with the heel's lower end Ks placed on the incline portion **14** and the ball of the driver's foot Bs made contact the appropriate position of the pressing portion **5a** of the brake pedal **5.** Thereby, the driver may have the uncomfortable feelings, and the stable pressing operation of the brake pedal **5** with the fixed support point may not be provided. Meanwhile, in case the brake-pedal side extension portion **47** which is provided beside the accelerator pedal **4** extends forwardly and upwardly for the brake pedal **5** like the present embodiment, it can be prevented that the heel becomes off the incline portion **14** during the pressing operation of the brake pedal **5**, so that the stable pressing operation of the brake pedal **5** can be provided, keeping the heel's lower end of the driver placed on the incline portion **14.**

Herein, an upper face of a heel placing area for the clutch pedal **6**, on which the heel of the driver's left foot is placed, may be formed by a further extended portion from the above-described incline forming member **44** for the accelerator pedal **4** and the brake pedal **5**, having the same inclination angle as that of the above-described incline portion **14**. Further, a footrest for the driver's left foot off the clutch pedal **6** may be formed by a further extended portion from the above-described incline forming member **44.**

Further, in case the inclination angle α of the incline portion of the incline portion **14** relative to the horizontal face is set within the range of 13.5 through 23.5 degrees like the present embodiment, the pressing operation of the accelerator pedal **4** can be conducted properly by making the ball of the driver's foot Bs contact the appropriate position of the pressing portion of the accelerator pedal **4**, keeping the heel's lower end Ks of the short driver S and the others placed on the incline portion **14**.

That is, in case the inclination angle α of the incline portion of the incline portion **14** is greater than 23.5 degrees, the heel's lower end Ks placed on the incline portion **14** may be easily made slip downwardly and rearwardly due to the reaction force from the pedal pressing. Therefore, setting the inclination angle α to 23.5 degrees or less can prevent the slipping down of the heel's lower end Ks properly, thereby providing the stable placing of that on the incline portion **14.** Meanwhile, setting the inclination angle α of the incline portion of the incline portion **14** to 13.5 degrees or greater can provide an effect of locating its upper face at the proper high level. That is, the ball of the driver's foot Bs can be made contact the appropriate position of the pressing portion **20** of the accelerator pedal **4** properly, keeping the heel's lower end Ks of the short driver S placed on the incline portion **14.**

Further, since the incline forming member **44** is preferably made of the pad material, such as urethane foam or synthetic rubber, which has the rigidity enough to support the heel of the operational foot of the driver at the normal state and the resilience enough to absorb the impact energy acting on the heel of the operational foot of the driver at the vehicle collision in the present embodiment, in case the driver's body is biased forwardly by the inertia force which is caused by the vehicle collision and thereby some reaction force acts on the heel of the driver pressing the brake pedal **5** or the like, the incline forming member **44** can be made properly deform. Accordingly, the impact load acting on the driver's heel from the vehicle floor and the like can be effectively reduced.

Herein, a so-called styro-foam which is made of the mixture of polystyrene and polyethylene with the foaming ratio of twenty through thirty times may be preferably applied as the pad material of the incline forming member **44.** Polyethylene may be properly combined to improve the fragility of polystyrene. While the higher foaming ratio increases the tenderness, the appropriate foaming ratio should be finally decided through some actual collision tests, considering totally the necessary thickness for impact absorption, weight reduction and others. The styro-foam with the foaming ratio of twenty through thirty times is so considerably harder than one generally used as packing materials for the home electronics that it may not be made deform easily by pressing with the person's thumb. Since the pad material of the incline forming member **44** of the present invention has the thicker thickness at its front (forward) portion compared to the conventional one, its necessary thickness can be provided easily and it can be advantageous in improving the impact absorption. Herein, the pad material with the foaming ratio of forty times may be applied for further reduction of the weight despite its thicker thickness.

Further, since the pressing-face board **13** of the accelerator pedal **4** includes the pressing portion **20** which has the convex face which projects rearwardly of the vehicle, which the ball of the operational foot of the driver contacts the driver's pedal pressing in the present embodiment, even in case the driver presses the accelerator pedal **4** in a state in which the heel's lower end of the driver's foot is placed at a specified position which is located rearwardly from the rear support point of the pressing-face board **13** so that the contact point of the driver's heel with the pressing portion **20** moves vertically in accordance with the pedal pressing, the driver can be effectively prevented from having uncomfortable feelings.

For example, in case the disposition height of the pressing portion **20** relative to the pressing-face board **13** is set to a position appropriate for the foot's length of the short driver S, the average-sized driver M or the tall driver T, who have a longer foot size, may try to move the heel's lower end Km, Kt rearwardly to make the ball of the foot Bm, Bt contact the appropriate position of the pressing portion 20 (see FIGS. **14** and **16**). Herein, in case the driver conducts the pressing operation of the pressing-face board **13** in the state in which the heel's lower end Km, Kt of the driver's foot is placed at the specified position located rearwardly from the lower-end hinge portion **16** of the pressing-face board **13** as described above, a moving locus of the pressing portion **20** which swings around the support point of the lower-end hinge portion **16** becomes extremely different from that of the ball of the driver's foot which swings around the support point of the heel's lower end Kt, so that the contact point of the back face of the driver's shoe with the pedal pressing face may move forwardly (toward the toes side) improperly and inevitably as the pressing amount of the pressing-face board **13** increases.

In this case, if the pressing portion of the pressing-face board **13** is formed linearly or in a curve shape with projecting forwardly so as to match the curve of the back face of the driver's shoe, the contact of the back face of the driver's shoe with the pressing portion may be a face contact and the contact point of the back face of the driver's shoe with the pedal pressing face may move forwardly intermittently with slips as the pressing amount of the pressing-face board **13** increases, so that the driver could feel this move too sensitively and thereby have uncomfortable feelings.

According to the present embodiment, however, since the pressing portion **20** of the pressing-face board **13** is comprised of the arc-shaped convex face projecting rearwardly, the back face of the driver's shoe is made contact a point of the convex face of the pressing portion **20** with a line contact. Accordingly, even in case the tall driver T and others press the accelerator pedal in a state in which the heel's lower end Kt of the driver's foot is placed at the specified position which is located rearwardly from the rear support point of the pressing-face board **13,** the contact position of the back face of the driver's shoe with the pressing portion **20** can change smoothly and continuously according to the pressing of the accelerator pedal **4,** so that the driver can be effectively prevented from having the uncomfortable feelings.

Further, since the floor structure of the present embodiment further comprises the seat adjusting mechanism which comprises the longitudinal-position adjusting mechanism **2** and the inclination-angle adjusting mechanism **3,** which moves the driver's seat **1** in the longitudinal direction and reduces the rearward inclination angle of the seat cushion **1 a** of the driver's seat **1** in accordance with the forward move of the driver's seat **1,** the longitudinal position of the driver's seat **1** and the inclination angle of the seat cushion **1a** is automatically adjusted so that the driver can keep its proper sitting position regardless of the body size, matching the driver's eye point to the appropriate line L, and get the superior handle and pedal operations.

Further, in case the sitting position of the driver seated in the driver's seat **1** or the like change in accordance with the operation of adjusting the longitudinal position of the driver's seat **1** and the inclination angle of the seat cushion **1a,** since the incline portion **14** is formed at the specified position on the floor panel **9** near the driver's foot, even the short driver S who has the shorter foot's length can conduct the pressing operation of the accelerator pedal **4** and the like properly in the state in which the heel's lower end Ks of the short driver S is placed on the incline portion **14** and the ball of the driver's foot Bs is made contact the appropriate position of the pressing portion **20** of the accelerator pedal **4** and the like, maintaining the proper angles of the ankle's angle θ1 and the sole's inclination angle θ7. Thus, the proper pedal operation and the like can be provided.

Herein, while the incline forming member **44** of the above-described embodiment comprises the brake-pedal side extension portion **47** which is provided beside the accelerator pedal **4** and extends forwardly and upwardly with substantially the same inclination angle as that of the incline portion **14** of the heel placing area on which the driver's heel is placed, it may comprise a brake-pedal side extension portion **47'** which is provided beside the accelerator pedal **4** and extends forwardly and upwardly with a specified inclination angle which is smaller than that that of the incline portion **14** of the heel placing area on which the driver's heel is placed.

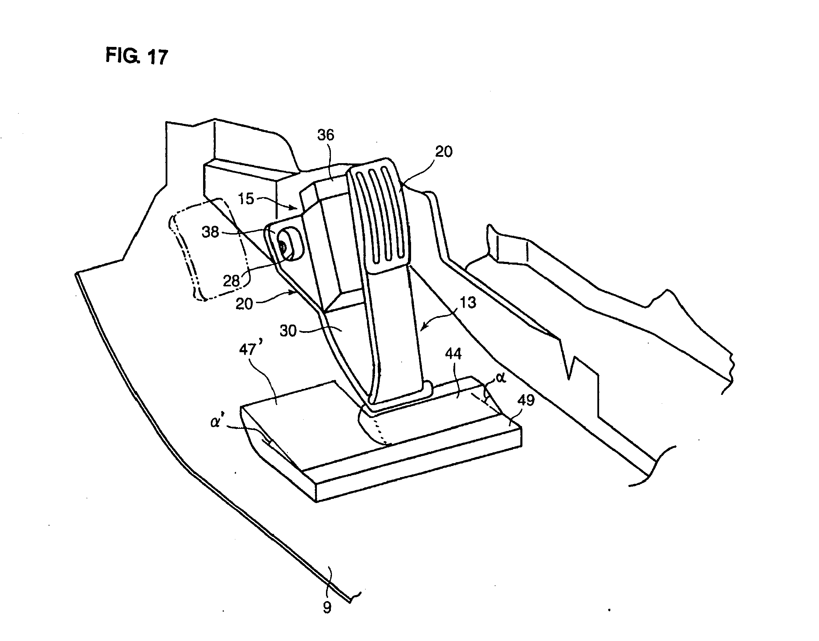

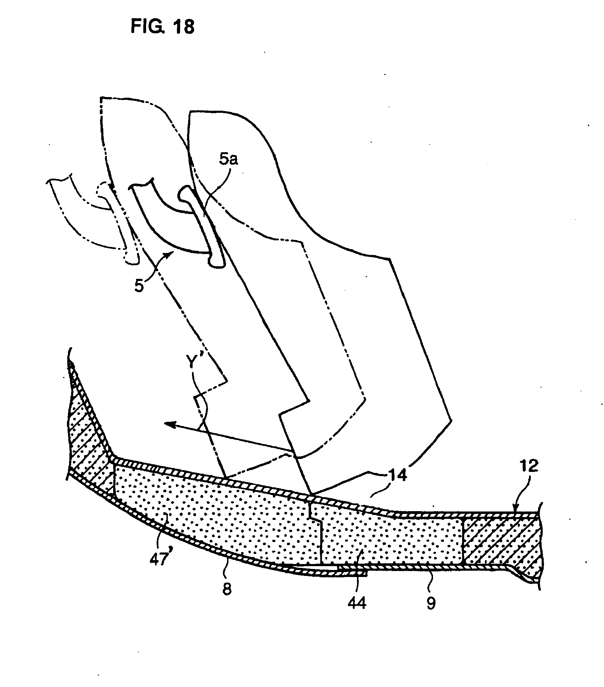

That is, in a modified embodiment of the above-described embodiment shown in FIGS. **17** and **18****,** the brake-pedal side extension portion **47'** extending forwardly and upwardly has a specified inclination angle α' which is smaller than the inclination angle α of the incline portion **14** of the incline forming member **44.** Thereby, even in case the tall driver having a large foot presses the pressing portion **5a** of the brake pedal **5** at the ball of the driver's foot with the heel located at a lower position during the urgent braking, since the forward-and-upward inclination angle of the brake-pedal side extension portion **47'** is relatively small, any resistance which the driver's foot may receive from the upper slant portion of the portion **47'** through its heel moving forward shown by an arrow **Y'** in FIG. **18** while pressing the brake pedal may be properly reduced. In this modified embodiment, it may be preferable that the above-described inclination angle α be set at around 15 degrees, while the above-described inclination angle α' be set at around 10 degrees.

The present invention should not be limited to the above-described embodiments, and any other modifications or improvements may be applied within the scope of the present invention, as defined by the appended claims. For example, while the driver's seat **1** is automatically moved longitudinally by the longitudinal-position adjusting mechanism **2** according to the switch operation by the driver and the inclination angle of the seat cushion 1 a is reduced according to the forward move of the driver's seat **1** in the above-described embodiment, the longitudinal position of the driver's seat **1** and the inclination angle of the seat cushion **1a** may be adjusted with a manual operation of the driver.

## Claims

1. A floor structure of a driver's seat (**1**) for an automotive vehicle, comprising:
an accelerator pedal (**4**) supported swingably at a support point with a rear end hinge portion (**16**) thereof;
a floor mat (**12**) provided to cover an upper face of a front portion of a floor panel (**9**) located in front of the driver's seat (**1**); and
an incline forming member (**44**) provided at a specified portion of said floor mat (**12**) located in back of a pressing-face board (**13**) of said accelerator pedal (**4**), the incline forming member (**44**) forming an incline portion (**14**) at an upper face of a heel placing area on which a driver's heel is placed or placable, the incline portion (**14**) being inclined so that a front portion thereof is positioned at a higher level than a rear portion thereof.

2. The floor structure of a driver's seat (**1**) for an automotive vehicle of claim 1, wherein said accelerator pedal (**4**) is an organ type of accelerator pedal (**4**) and/or a hanging type of brake pedal (**5**) is provided beside said accelerator pedal (**4**) and supported swingably at a support point with an upper pivotal portion (**45**) thereof.

3. The floor structure of a driver's seat (**1**) for an automotive vehicle of claim 1 or 2, wherein said incline forming member (**44**) comprises a brake-pedal side extension portion (**47**) which is provided beside the accelerator pedal (**4**) and extends forwardly and upwardly with substantially the same or a smaller inclination angle as that of said incline portion (**14**) of the heel placing area on which the driver's heel is placed.

4. The floor structure of a driver's seat (**1**) for an automotive vehicle of any one of claims 1 through 3, wherein an inclination angle of said incline portion (**14**) of the heel placing area is set within a range of 13.5 through 23.5 degrees.

5. The floor structure of a driver's seat (**1**) for an automotive vehicle of any one of claims 1 through 4, wherein said incline forming member (**44**) is made of a pad material which has a rigidity enough to support the heel of an operational foot of the driver at a normal state and a resilience enough to absorb an impact energy acting on the heel of the operational foot of the driver at a vehicle collision.

6. The floor structure of a driver's seat (**1**) for an automotive vehicle of any one of claims 1 through 5, wherein said pressing-face board (**13**) of the accelerator pedal (4) includes a pressing portion (**20**) which has a convex face which projects rearwardly of the vehicle, such that said pressing portion (**20**) can be contacted by a ball of an operational foot of the driver.

7. The floor structure of a driver's seat (**1**) for an automotive vehicle of any one of claims 1 through 6, further comprising a seat adjusting mechanism (**2, 3**) which moves the driver's seat (**1**) in a longitudinal direction and reduces a rearward inclination angle of a seat cushion (**1a**) of the driver's seat (**1**) in accordance with a forward move of the driver's seat (**1**).

8. The floor structure of a driver's seat (**1**) for an automotive vehicle of any one or more of the preceding claims, wherein said incline forming member (**44**) is arranged in a space which is formed by cutting out part of a back reinforcing material (**10**) of the floor mat (**12**) and/or a layer material (**11**) covers an upper face of the incline forming member (**44**).

9. The floor structure of a driver's seat (**1**) for an automotive vehicle of any one or more of the preceding claims, wherein said incline forming member (**44**) comprises a foam including a mixture of polystyrene and polyethylene and a foaming ratio is preferably between twenty to forty, at the best between twenty and thirty.

10. A method of providing a floor structure of a driver's seat (**1**) for an automotive vehicle, comprising the steps of:
supporting an accelerator pedal (**4**) swingably at a support point with a rear end hinge portion (**16**) thereof;
providing a floor mat (**12**) to cover an upper face of a front portion of a floor panel (**9**) located in front of the driver's seat (**1**); and
providing an incline forming member (**44**) at a specified portion of said floor mat (**12**) located in back of a pressing-face board (**13**) of said accelerator pedal (**4**), the incline forming member (**44**) forming an incline portion (**14**) at an upper face of a heel placing area on which a driver's heel is placed or placable, the incline portion (**14**) being inclined so that a front portion thereof is positioned at a higher level than a rear portion thereof.
